# EUROPÄISCHE PATENTANMELDUNG

(11) **EP 2 409 908 A1**
(43) Veröffentlichungstag der Anmeldung: **25.01.2012**
(21) Anmeldenummer: 11006026.6
(22) Anmeldetag: 22.07.2011
(51) Int. Cl.: B62K 19/10, B62K 19/12, B62K 19/20, B62K 19/34

(54) **Motorunterstütztes Fahrrad**

(30) Priorität: 22.07.2010 DE 202010010521 U
(71) Anmelder: Winora-Staiger GmbH, 97526 Sennfeld (DE)
(72) Erfinder: Puello, Felix, 97453 Schonungen (DE)
(74) Vertreter: Weigel, Matthias

(57) **Zusammenfassung**

Die Erfindung betrifft ein motorunterstütztes Fahrrad, umfassend ein Rahmenelement (20), welches sich im Wesentlichen in Fahrtrichtung des motorunterstützten Fahrrads erstreckt und an seinem in Fahrtrichtung vorderen Ende (22) mit einem unteren Ende eines mit einem Kopfrohr (16) zum Abstützen eines Lenkers verbundenen Unterrohrs (18) und an seinem in Fahrtrichtung hinteren Ende (24) mit einem unteren Ende eines Sattelrohrs (26) zum Abstützen einer Sattelstütze oder/und eines Sattels verbunden ist, und eine motorangetriebene Unterstützungseinheit (12) zum Erzeugen einer auf eine Kurbelwelle (50) eines Pedalantriebs (52) des Fahrrads auszuübenden Unterstützungskraft. Erfindungsgemäß ist das Rahmenelement (20) unterhalb der motorangetriebenen Unterstützungseinheit (12) angeordnet.

## Beschreibung

Die vorliegende Erfindung betrifft ein motorunterstütztes Fahrrad, umfassend ein Rahmenelement, welches sich im Wesentlichen in Fahrtrichtung des motorunterstützten Fahrrads erstreckt und an seinem in Fahrtrichtung vorderen Ende mit einem unteren Ende eines mit einem Kopfrohr zum Abstützen eines Lenkers verbundenen Unterrohrs und an seinem in Fahrtrichtung hinteren Ende mit einem unteren Ende eines Sattelrohrs zum Abstützen einer Sattelstütze oder/und eines Sattels verbunden ist, und eine motorangetriebene Unterstützungseinheit zum Erzeugen einer auf eine Kurbelwelle eines Pedalantriebs des Fahrrads auszuübenden Unterstützungskraft.

Bei motorunterstützten Fahrrädern mit einer motorangetriebenen Unterstützungseinheit zum Erzeugen einer Unterstützungskraft ist es bekannt, die motorangetriebene Unterstützungseinheit unterhalb einer Kurbelwelle eines Pedalantriebs des Fahrrads und in einem Bereich zwischen der Kurbelwelle und einem Hinterrad des Fahrrads anzuordnen, um auf diese Weise den Schwerpunkt des motorunterstützten Fahrrads möglichst weit nach unten zu verlagern, um so die Fahreigenschaften des motorunterstützten Fahrrads zu verbessern. Nachteilig hierbei ist jedoch, dass durch die niedrige Anordnung der motorangetriebenen Unterstützungseinheit, beispielsweise bei einer Fahrt abseits befestigter Wege, die Gefahr besteht, dass die motorangetriebene Unterstützungseinheit mit einem Hindernis kollidiert und hierdurch beschädigt wird.

Dem gegenüber ist es Aufgabe der Erfindung, ein motorunterstütztes Fahrrad bereitzustellen, welches eine motorangetriebene Unterstützungseinheit zum Erzeugen einer auf eine Kurbelwelle eines Pedalantriebs des Fahrrads auszuübenden Unterstützungskraft aufweist, welche gegenüber bekannten Systemen besser vor einer Beschädigung geschützt ist, ohne jedoch das Fahrverhalten des motorunterstützten Fahrrads wesentlich zu beeinflussen.

Erfindungsgemäß wird diese Aufgabe bei einem motorunterstützten Fahrrad der eingangs genannten Art dadurch gelöst, dass das Rahmenelement unterhalb der motorangetriebenen Unterstützungseinheit angeordnet und mit dieser gekoppelt ist.

Erfindungsgemäß wird die motorangetriebene Unterstützungseinheit also nicht nur an seiner Vorderseite oder/und Unterseite mit einem zusätzlichen, beispielsweise plattenartigen, Schutzelement versehen, welches dazu dient, auf die motorangetriebene Unterstützungseinheit ausgeübte Schläge und Stöße aufzufangen, oder die Unterstützungseinheit in eine Nabe eines Hinterrads integriert, sondern die motorangetriebene Unterstützungseinheit wird erfindungsgemäß "gedreht" und oberhalb des Tretlagers des motorunterstützten Fahrrads am Fahrradrahmen, beziehungsweise im Fahrradrahmen positioniert. Diese Anordnung einer motorangetriebenen Unterstützungseinheit hat den Vorteil, dass es nicht notwendig ist, ein zusätzliches Schutzelement bereitzustellen, um die Unterstützungseinheit vor Schlägen oder Stößen zu schützen, oder den Schwerpunkt weit nach hinten zu verlagern, da die erfindungsgemäße Art der Anordnung eine große Bodenfreiheit des motorunterstützten Fahrrads ermöglicht, wodurch sich die Geländegängigkeit des motorunterstützten Fahrrads deutlich verbessert. Gleichzeitig wird das Fahrverhalten auf Grund des verlagerten Schwerpunkts nicht verschlechtert, da durch die zentrale Anordnung der Unterstützungseinheit im Fahrradrahmen eine sehr ausgeglichene Gewichtsverteilung auf den Rahmen und das gesamte Fahrrad erreicht wird, wodurch sich abhängig vom Einsatzgebiet sogar deutlich verbesserte Fahreigenschaften ergeben können.

Das Rahmenelement kann ein Mittelteil und zwei Anschlussteile aufweist, welche von den in Fahrtrichtung beabstandeten Enden des Mittelteil nach oben hin vorstehen und mit dem Unterrohr und dem Sattelrohr verbunden sind. Das Rahmenelement bildet somit zusammen mit dem Unterrohr und dem Sattelrohr in einer Seitenansicht des motorunterstützten Fahrrads eine U-förmige Rahmenanordnung, welche die motorangetriebene Unterstützungseinheit nicht nur von unten sondern auch von vorne und hinten beispielsweise vor Steinen schützt, welche von einem Vorderrad oder Hinterrad des motorunterstützten Fahrrads hochgeschleudert bzw. weggeschleudert werden.

Das Rahmenelement kann getrennt von dem Unterrohr oder/und dem Sattelrohrs ausgebildet sein. Vorzugsweise sind hierbei bei zumindest einem der beiden Anschlussteile und dem diesen jeweils zugeordneten Rohr ebene Anschlussflächen vorgesehen sind, an denen das Anschlussteil und das diesem zugeordnete Rohr, beispielsweise durch Schweißen oder Löten, miteinander fest verbunden sind. Um die Verbindungsfläche zwischen den beiden aneinander anliegenden ebenen Anschlussflächen möglichst groß auszubilden, sind die Anschlussflächen gegenüber der Längsachse des Rohrs nicht rechtwinklig, sondern unter einem Winkel (α) geneigt zur Längsachse des Rohrs verlaufend ausgeführt. Der Winkel liegt in einem Bereich von 15° bis 75°, vorzugsweise in einem Bereich von 25° bis 65°, besonders bevorzugt in einem Bereich von 35° bis 55°, Neigung gegenüber einer rechtwinklig zur Längsachse des Rohres verlaufenden Ebene. Durch die geneigte Ausbildung der Anschlussflächen gegenüber der Längsachse des Rohres wird eine definierte Vergrößerung der Flächen erreicht, an denen das Anschlussteil mit dem Rohrende verbunden ist, wodurch bei durch beispielsweise Schweißen miteinander verbundenem Anschlussteil und Rohr die Länge der Schweißnähte um den Faktor 1 / cos (α) größer ist als bei einem rechtwinkligen Verlauf der Anschlussflächen gegenüber der Längsachse des Rohrs.

Um eine optimale Verbindung des Rahmenelements mit dem Unterrohr oder/und dem Sattelrohr zu ermöglichen, kann vorgesehen sein, dass jedes Anschlussteil mit einem Anschlussflansch zur Verbindung mit dem Unterrohr oder/und dem Sattelrohr versehen ist. Dieser Anschlussflansch kann dabei an die Anschlussmaße von Rohren unterschiedlicher Hersteller angepasst sein, so dass es beispielsweise auch möglich ist, ein gewöhnliches Fahrrad nachträglich zu einem motorunterstützten Fahrrad umzurüsten, indem lediglich der Bereich des Tretlagers von einem Unterrohr und einem Sattelrohr abgetrennt wird und durch das erfindungsgemäße Rahmenelement ersetzt wird. Auch die Anschlussflansche können dabei unter einem Winkel geneigt und nicht rechtwinklig verlaufend zur Längsachse des mit dem Anschlussflansch zu verbindenden Rohrs verlaufen.

Das Rahmenelement ist vorzugsweise als Druckgussteil ausgebildet, bei dem entsprechend ausgebildete Lagerstellen und Anschlussstellen, beispielsweise durch spanende Bearbeitung, wie Schleifen und/oder Fräsen, nachbearbeitet sind. Das Rahmenelement kann jedoch auch als ein Schmiedeteil oder/und ein gefrästes Teil ausgebildet sein.

So hat sich gezeigt, dass die Ausbildung des Rahmenelementes als Druckgussteil gegenüber einem Schmiedeteil bei der Fertigung weniger aufwendig ist, bei gleichzeitig ausreichender Festigkeit. Das Rahmenelement besteht vorzugsweise aus einer Aluminiumlegierung, wodurch sich ein besonders leichtes metallisches Werkstück erzeugen lässt, um so das Rahmengewicht niedrig zu halten. Insbesondere wird die Verwendung schweißbarer Aluminiumlegierungen vorgeschlagen, beispielsweise die Verwendung von Aluminiumlegierungen wie AlSi, AlSiCu, AlSiMg, AlCuTi oder AlMg, die besonders bevorzugt zur Herstellung des Rahmenelementes als Druckgussteil Verwendung finden. Bei der Auswahl der Aluminiumlegierung kommt es insbesondere darauf an, dass die Aluminiumlegierung einerseits die erwünschte Festigkeit und Standzeitfestigkeit aufweist, während sie anderseits mit den Materialen des Unterrohrs und des Sattelrohrs gut verschweißbar sein soll. Alternativ ist es jedoch auch möglich, das Rahmenelement aus einem Faserverbundwerkstoff, insbesondere einem kohlefaserverstärkten Kunstharzmaterial herzustellen, was eine zusätzliche Gewichtseinsparung erlaubt.

Weiterhin kann vorgesehen sein, dass das Rahmenelement eine Lagerstelle zur Lagerung einer Hinterradgabel des Fahrrads aufweist. Abhängig davon, ob das Rahmenelement für ein Fahrrad mit starrer Hinterradgabel oder ein Fahrrad mit Hinterradfederung bestimmt ist, kann die Lagerstelle als starre Verbindung oder als Schwenklager ausgebildet sein, welches die Hinterradgabel schwenkbar an dem Rahmenelement lagert.

Um auch eine Verwendung von motorangetriebenen Unterstützungseinheiten ohne integrierten Pedalantrieb in Verbindung mit einem Fahrradrahmen zu erlauben, kann vorgesehen sein, dass das Rahmenelement eine als Tretlager ausgebildete Lagerstelle zur Lagerung der Kurbelwelle des Pedalantrieb aufweist. Durch diese Ausgestaltungsform ist es möglich, ein vormontiertes Rahmenelement bereitzustellen, das heißt, ein Rahmenelement, an dem abgesehen von der motorangetriebenen Unterstützungseinheit bereits der Pedalantrieb samt Kurbelwelle, Tretlager, Pedal und Antriebskettenrad angebracht sind, was beispielsweise eine Endmontage des Fahrrads erleichtert, da hierbei nur noch die motorangetriebene Unterstützungseinheit an dem in einen Fahrradrahmen integrierten Rahmenelement angebracht werden muss. Diesbezüglich wird besonders darauf hingewiesen, dass das Rahmenelement entweder so ausgebildet sein kann, dass es an die Anschlussmaße einer bestimmten Unterstützungseinheit eines Herstellers angepasst ist, oder dass es, gegegenenfalls unter Zwischenschaltung von unterschiedlichen Adaptern, an die Anschlussmaße unterschiedlicher Unterstützungseinheiten eines oder mehrerer Herstellers angepasst werden kann.

Das Rahmenelement kann zwei in Querrichtung des Fahrrads voneinander beabstandete und in Längsrichtung des Fahrrads im Wesentlichen parallel zueinander verlaufende plattenförmige Elemente aufweisen, was nicht nur eine Ausbildung eines Rahmenelements mit reduziertem Gewicht erlaubt sondern darüber hinaus eine vereinfachte Kabelführung sowie einen vereinfachten Anschluss derselben an die motorangetriebene Unterstützungseinheit erlaubt.

Um die Steifigkeit eines derart ausgebildeten Rahmenelements sicherzustellen, kann vorgesehen sein, dass die plattenförmigen Elemente des Rahmenelements über wenigstens ein in Querrichtung des Fahrrads verlaufendes Verbindungselement miteinander verbunden sind.

Das wenigstens eine Verbindungselement kann beispielsweise wenigstens einen in Querrichtung des Fahrrads verlaufenden Verbindungssteg umfassen.

Alternativ oder zusätzlich kann auch vorgesehen sein, dass das wenigstens eine Verbindungselement ein unten geschlossenes, in einer Querrichtung verlaufendes schalenförmiges Aufnahmeelement zur Abdeckung der Unterseite der motorangetriebenen Unterstützungseinheit oder/und Lagerung der motorangetriebenen Unterstützungseinheit oder/und Aufnahme eines Getriebes umfasst. Es wird also zusätzlich zu der Anordnung der motorangetriebenen Unterstützungseinheit an der Oberseite des Rahmenelements eine integral mit dem Rahmenelement ausgebildete Schutzplatte bereitgestellt, welche sämtliche beweglichen Teile, beispielsweise des Pedalantriebs, abdeckt und schützt.

Das schalenförmiges Aufnahmeelement kann sich dabei nicht nur zwischen den zwei plattenförmigen Elementen erstrecken, sondern es kann vorgesehen sein, dass wenigstens ein in einer Querrichtung des Fahrrads weisendes Ende des schalenförmigen Aufnahmeelements, gegebenenfalls unter Bildung einer Stufe, in Querrichtung über wenigstens ein plattenförmiges Element hinaus verlängert ist, wobei das Ende desselben mit einer im Wesentlichen halbkreisförmigen Abdeckung verbunden sein kann. Diese Ausgestaltungsform des schalenförmigen Aufnahmeelements ermöglicht beispielsweise die Lagerung eines Tretlagers des Fahrrads oder eines Getriebeelements, welches dazu dient, die von der motorangetriebenen Unterstützungseinheit erzeugte Unterstützungskraft auf eine Kurbelwelle eines Pedalantriebs des Fahrrads zu übertragen. Darüber hinaus kann beispielsweise vorgesehen sein, dass das schalenförmige Aufnahmeelement eine untere Getriebegehäusehälfte und die motorangetriebene Unterstützungseinheit eine obere Getriebegehäusehälfte zur Aufnahme beispielsweise der Kurbelwelle und des Tretlagers bilden, oder dass das schalenförmige Aufnahmeelement eine untere Motorgehäusehälfte der motorangetriebenen Unterstützungseinheit bildet.

Weiterhin kann vorgesehen sein, dass das schalenförmige Aufnahmeelement oder/und die Abdeckung das Tretlager konzentrisch umgeben, was beispielsweise vorteilhaft ist, wenn das Tretlager Teil der motorangetriebenen Unterstützungseinheit ist, da sich dann eine einfache Abdichtung und Lagerung des Getriebes erreichen lässt.

Weiterhin kann vorgesehen sein, dass das Sattelrohr gekröpft ausgebildet ist und dass das mit dem Rahmenelement verbundene untere Ende des Sattelrohrs zur Rückseite des Fahrrads hin versetzt ist, wodurch es möglich ist, den von der Rahmenanordnung, d.h. dem Unterrohr, dem Rahmenelement und dem Sattelrohr begrenzten Bauraum für die motorangetriebene Unterstützungseinheit in Längsrichtung des Fahrrads zu vergrößern, um so eine Verwendung von flacheren Unterstützungseinheiten mit niedrigerem Schwerpunkt zu ermöglichen.

Weiterhin kann vorgesehen sein, dass die motorangetriebene Unterstützungseinheit einen Elektromotor aufweist, was aber nicht ausschließen soll, dass auch andere Arten von Antrieben mit dem erfindungsgemäßen motorunterstützten Fahrrad verwendet werden können, wobei im Sinne der Erfindung alle Vorrichtungen umfasst sind, die in der Lage sind, mechanische Arbeit zu verrichten, indem sie verschiedene Energieformen, wie zum Beispiel thermische Energie, chemische Energie oder elektrische Energie in Bewegungsenergie umwandeln.

Eine Ausführungsform der Erfindung wird nachfolgend unter Bezugnahme auf die beigefügten Figuren näher erläutert. Darin zeigt:
- Fig. 1: eine linke Seitenansicht eines Fahrradrahmens eines motorunterstützten Fahrrads gemäß einer Ausführungsform der vorliegenden Erfindung;

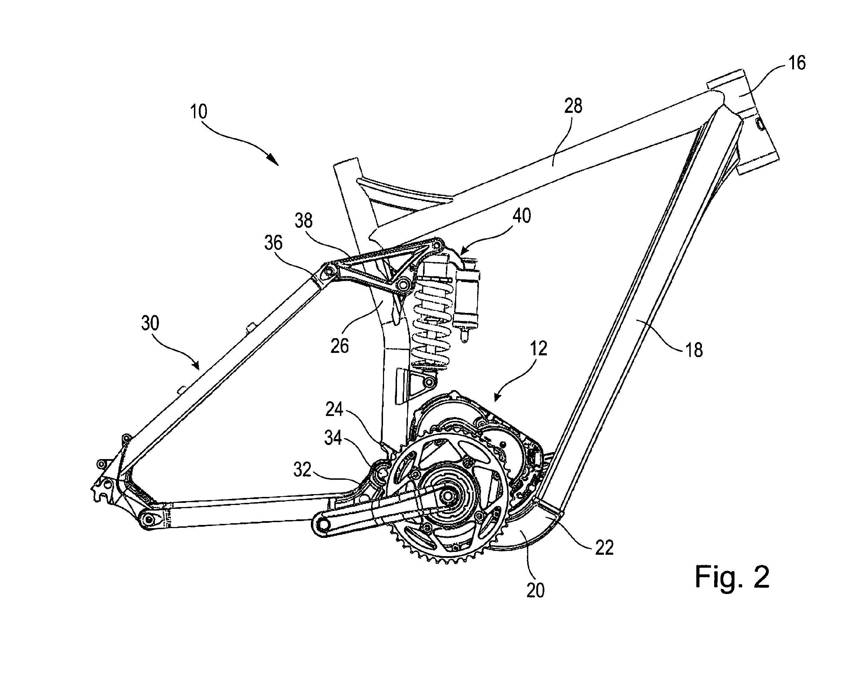

- Fig. 2: eine rechte Seitenansicht des Fahrradrahmens von Fig. 1;
- Fig. 3: eine vergrößerte Ansicht eines wesentlichen Abschnitts des Fahrradrahmens von Fig. 1;
- Fig. 4: eine perspektivische Ansicht des Fahrradrahmens von links unten;
- Fig. 5: eine perspektivische Ansicht des Fahrradrahmens von rechts unten;

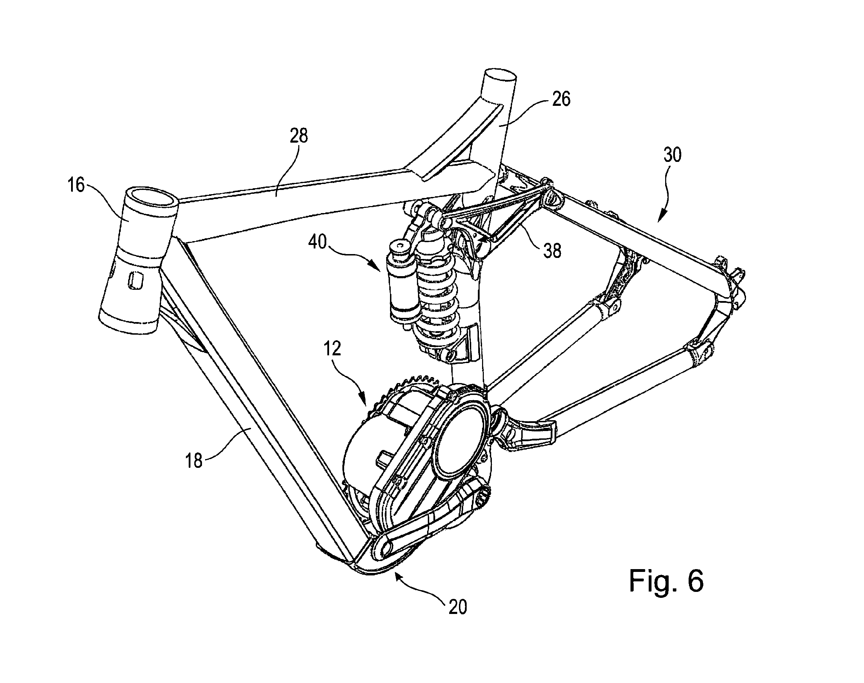

- Fig. 6: eine perspektivische Ansicht des Fahrradrahmens von links oben; und

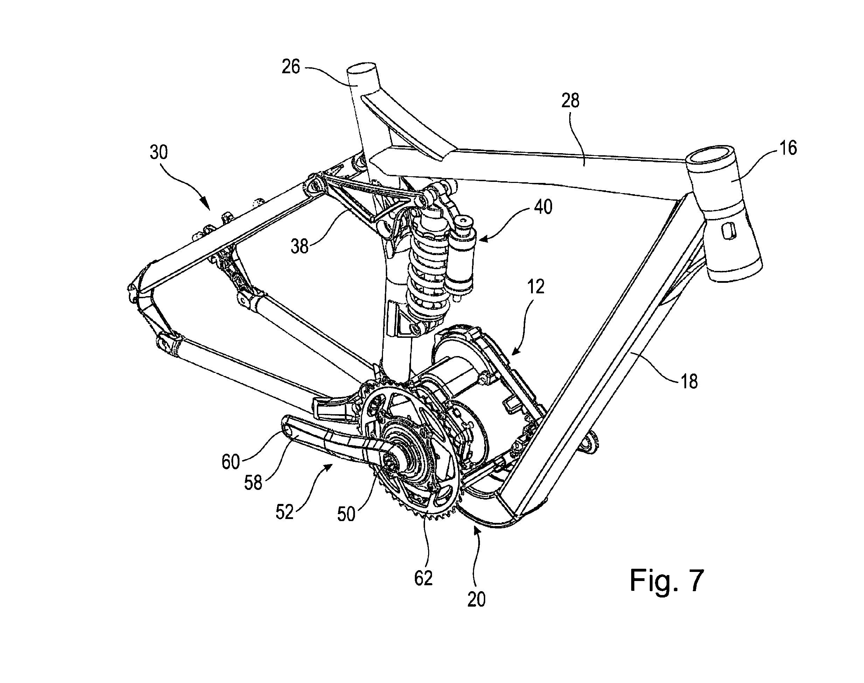

- Fig. 7: eine perspektivische Ansicht des Fahrradrahmens von rechts oben.

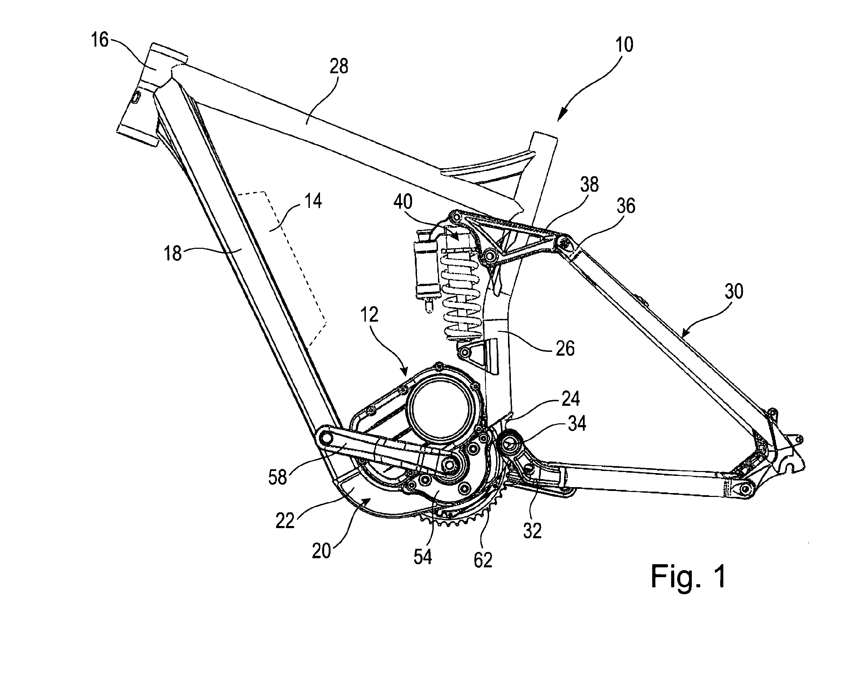

Fig. 1 zeigt eine linke Seitenansicht eines allgemein mit 10 bezeichneten Fahrradrahmens zur Lagerung einer motorangetriebenen Unterstützungseinheit 12 und einer lediglich in der Fig. 1 schematisch dargestellten Energieversorgungseinrichtung 14, welche als Energiequelle für die motorangetriebene Unterstützungseinheit 12 dient. Die in den Figuren dargestellte motorangetriebene Unterstützungseinheit 12 dient erfindungsgemäß zum Antreiben eines nicht dargestellten Hinterrads und stellt lediglich ein Beispiel für eine motorangetriebene Unterstützungseinheit dar, auf deren konkreten Aufbau im folgenden nicht näher eingegangen wird, da der grundsätzliche Aufbau einer motorangetriebenen Unterstützungseinheit für ein Fahrrad samt zugehöriger Tretkrafterfassung und Steuerung/Regelung bekannt und nicht Gegenstand der Anmeldung ist.

Der Fahrradrahmen 10 umfasst ein Kopfrohr 16, welches an der vorderen Seite des Fahrradrahmens 10 angeordnet ist; ein Unterrohr 18, welches sich von dem Kopfrohr 16 aus schräg nach hinten und nach unten erstreckt; ein Rahmenelement 20, welches sich im Wesentlichen in Fahrtrichtung des motorunterstützten Fahrrads erstreckt und an seinem in Fahrtrichtung vorderen Ende 22 mit einem unteren Ende des Unterrohr 18 und an seinem in Fahrtrichtung hinteren Ende 24 mit einem unteren Ende eines Sattelrohrs 26 zum Abstürzen einer nicht gezeigten Sattelstütze oder/und eines nicht gezeigten Sattels verbunden ist; ein Oberrohr 28, welches sich von dem Kopfrohr 16 aus schräg nach hinten und nach unten erstreckt und mit einem oberen Abschnitt des Sattelrohrs 26 verbunden ist; und eine Hinterradgabel 30, welche sich im Wesentlichen von der Rückseite des Sattelrohrs 26 entgegen der Fahrtrichtung nach hinten erstreckt und an ihrem unteren vorderen Ende 32 über ein Schwenklager 34 an dem hinteren Ende 24 des Rahmenelements 20 schwenkbar gelagert ist und an ihrem oberen Ende 36 mit einem an dem Sattelrohr 26 schwenkbar gelagerten Hebelelement 38 gekoppelt ist, welches eine Schwenkbewegung der Hinterradgabel 30 auf ein Dämpferelement 40 überträgt, um so auf die Hinterradgabel 30 und das nicht dargestellte Hinterrad ausgeübte Stöße zu dämpfen.

Wie man deutlich erkennt, ist das Sattelrohr 26 im Bereich des Dämpferelement 40 gekröpft ausgebildet und zwar derart, dass das mit dem Rahmenelement 20, beziehungsweise dem hinteren Ende 24 des Rahmenelements 20 verbundene untere Ende des Sattelrohrs 26 zur Rückseite des Fahrradrahmens 10 hin versetzt ist, um auf diese Weise den zur Verfügung stehenden Einbauraum für die motorangetriebene Unterstützungseinheit 12 in Längsrichtung des Fahrradrahmens 10 zu vergrößern.

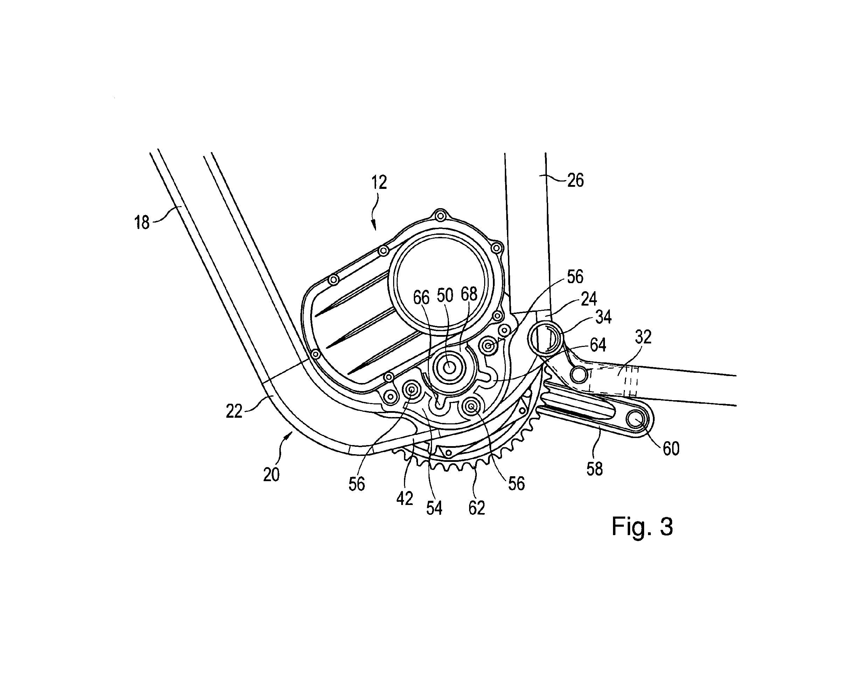

Nun auf die Fig. 3 Bezug nehmend, welche das Rahmenelement 20 und die motorangetriebene Unterstützungseinheit 12 in einer vergrößerten Darstellung zeigt, weist das Rahmenelement 20 einen Mittelteil 42 auf, von dem sich die als Anschlussteile dienenden vorderen und hinteren Enden 22 und 24 zur Verbindung mit dem Unterrohr 18 und dem Sattelrohrs 26 schräg nach oben hin erstrecken. Jedes dieser zwei Anschlussteile 22 und 24 ist dabei mit einem in den Figuren nicht näher dargestellten Anschlussflansch zur Verbindung mit dem Unterrohr 18 und dem Sattelrohrs 26 versehen.

Im dargestellten Ausführungsbeispiel verlaufen die ebenen Anschlussflächen, an denen das jeweilige Anschlussteil 22 bzw. 24 und das diesem zugeordnete Rohr 18 bzw. 26 durch Schweißen fest miteinander verbunden sind, zumindest annähernd rechtwinklig zur Längsachse des jeweiligen Rohres 18 bzw. 26. Alternativ ist es jedoch auch möglich, die ebenen Anschlussflächen so zu gestalten, dass sie gegenüber der Längsachse des Rohrs 18 bzw. 26 nicht rechtwinklig, sondern unter einem Winkel geneigt zur Längsachse des Rohrs 18 bzw. 26 verlaufen. Der Neigungswinkel kann beispielsweise bei 30° Neigung gegenüber einer rechtwinklig zur Längsachse des Rohres 18 bzw. 26 verlaufenden Ebene liegen. Durch die geneigte Ausbildung der Anschlussflächen gegenüber der Längsachse des Rohres 18 bzw. 26 wird eine definierte Vergrößerung der Flächen erreicht, an denen das Anschlussteil mit dem Ende des jeweiligen Rohres 18 bzw. 26 verbunden ist, wodurch die Länge der Schweißnähte, die das Anschlussteil 22 bzw. 24 mit dem Rohr 18 bzw. 26 fest verbindet, um den Faktor 1 / cos (α) größer ist als bei einem rechtwinkligen Verlauf der Anschlussflächen gegenüber der Längsachse des Rohrs 18 bzw. 26.

Das Rahmenelement 20 ist in dieser Ausführungsform getrennt von dem Unterrohr 18 und dem Sattelrohrs 26 ausgebildet und umschließt zusammen mit dem Unterrohr 18 und dem Sattelrohr 26 die motorangetriebene Unterstützungseinheit 12 von der Unterseite her und bildet dabei zusammen mit dem Unterrohr 18 und dem Sattelrohrs 26 eine im Wesentlichen U-förmige, nach oben hin divergierende Rahmenanordnung zur Aufnahme der motorangetriebenen Unterstützungseinheit 12.

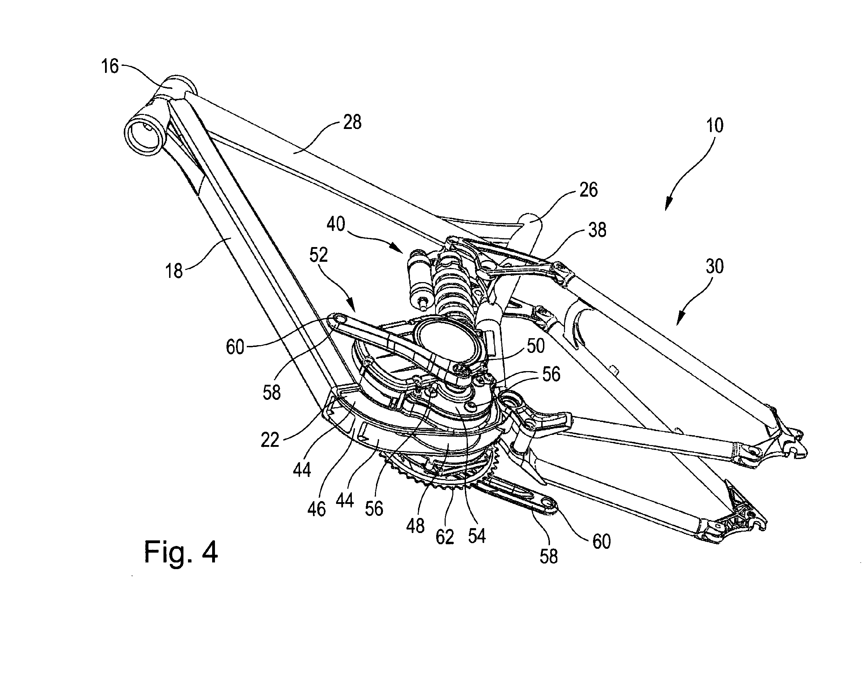

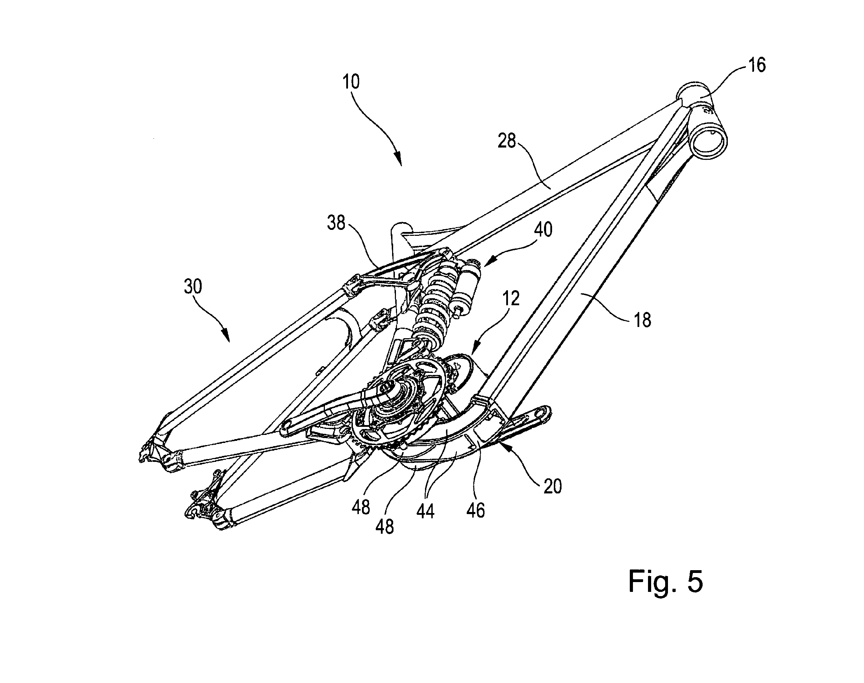

Das Rahmenelement 20 umfasst, wie am deutlichsten in den Fig. 4 und 5 zu sehen ist, zwei in Querrichtung des Fahrradrahmens 10 voneinander beabstandete und in Längsrichtung des Fahrradrahmens 10 im Wesentlichen parallel zueinander verlaufende plattenförmige Elemente 44. Im Bereich ihrer jeweiligen vorderen nach oben gebogenen Enden 22 sind die plattenförmigen Elemente 44 durch einen in Querrichtung des Fahrradrahmens 10 verlaufenden Verbindungssteg 46 miteinander verbunden.

Darüber hinaus weist das Rahmenelement 20 ein unten geschlossenes, in einer Querrichtung verlaufendes schalenförmiges Aufnahmeelement 48 zur Abdeckung der Unterseite der motorangetriebenen Unterstützungseinheit 12 auf. Zusätzlich hierzu kann das schalenförmiges Aufnahmeelement 48 auch zur Lagerung der motorangetriebenen Unterstützungseinheit 12 oder/und zur Aufnahme eines nicht dargestellten Getriebe dienen, welches beispielsweise Teil der motorangetriebenen Unterstützungseinheit 12 ist und dazu dient, eine von der motorangetriebenen Unterstützungseinheit 12 erzeugte Unterstützungskraft auf eine Kurbelwelle 50 eines Pedalantrieb 52 des Fahrrads auszuüben.

Wie am besten in Figur 4 zu sehen ist, erstreckt sich das linke Ende des schalenförmigen Aufnahmeelements 48 in Querrichtung des Fahrradrahmens 10 über das linksseitige plattenförmige Element 44 hinaus, beziehungsweise ist über das linksseitige plattenförmige Element 44 hinaus verlängert und ist an seinem in Querrichtung äußeren Ende mit einer im Wesentlichen halbkreisförmigen Abdeckung 54 versehen, welche durch drei Gewindebolzen 56 an dem schalenförmigen Aufnahmeelement 48 festgelegt ist.

Obwohl in der dargestellten Ausführungsform die Kurbelwelle 50 Teil der motorangetriebenen Unterstützungseinheit 12 ist, ist es selbstverständlich, dass die Kurbelwelle 50 auch getrennt von der motorangetriebenen Unterstützungseinheit 12 an dem Rahmenelement 20 angebracht und Teil des Rahmenelements 20 sein kann.

Zur Übertragung einer Tretkraft auf die Kurbelwelle 50 dienen zwei Kurbeln 58, welche mit den jeweiligen Enden der Kurbelwelle 50 verbunden sind und an ihren jeweiligen äußeren Enden mit Gewindelöchern 60 zur Befestigung nicht dargestellter Pedale versehen sind. Darüber hinaus ist die Kurbelwelle 50. im Bereich ihres rechten Endes mit einem Kettenblatt 62 versehen, welches dazu dient, über eine nicht dargestellte Kette eine auf die Pedale ausgeübte Tretkraft oder eine von der motorangetriebenen Unterstützungseinheit 12 erzeugte Antriebskraft, ggf. unter Zwischenschaltung einer am Hinterrad angebrachten Schaltung, zu dem nicht dargestellten Hinterrad zu übertragen.

Es versteht sich, dass anstelle der in den Figuren dargestellten motorangetriebenen Unterstützungseinheit 12, welche einen nicht näher erläuterten Elektromotor aufweist, eine beliebige anders ausgebildete motorangetriebene Unterstützungseinheit 12 mit dem erfindungsgemäßen Rahmenelement 12 verwendet werden kann.

Wenn die Abdeckung 54 Teil des Rahmenelements 20 darstellt und die Kurbelwelle 50 Teil der motorangetriebenen Unterstützungseinheit 12 ist, ist es darüber hinaus möglich, eine zusätzliche Drehmomentabstützung der motorangetriebenen Unterstützungseinheit 12 bezüglich des Rahmenelement 20 und damit des Fahrradrahmens 10 im Bereich der Kurbelwelle 50 bereitzustellen, wenn das Rahmenelement, wie in Fig. 3 dargestellt, mehrere U-förmige Ausnehmungen 64 zur Aufnahme von in radialer Richtung vom Außenumfang einer die Kurbelwelle 50 koaxial umgebenden Aufnahmehülse 68 abstehenden Vorsprüngen 66 aufweist, welche integral mit einem Gehäuse der motorangetriebenen Unterstützungseinheit 12 verbunden sind.

Es versteht sich jedoch, dass die in den Figuren dargestellte Abdeckung 54 auch Teil der motorangetriebenen Unterstützungseinheit 12 sein kann, in welchem Fall die Gewindebolzen 56 zur Befestigung der motorangetriebenen Unterstützungseinheit 12 am Rahmenelement 20 dienen.

Abhängig vom Einsatzzweck des Rahmenelement 20 und der Bauweise des Fahrradrahmens 10 kann das Rahmenelement als Druckgussteil, als Schmiedeteil und/oder gefrästes Teil ausgebildet sein. Darüber hinaus kann das Rahmenelement 20 beispielsweise aus einer Aluminiumlegierung oder einem Faserverbundwerkstoff, insbesondere einem kohlefaserverstärkten Kunstharzmaterial bestehen, welches bei einem sehr niedrigen Gewicht eine ausgezeichnete Steifigkeit besitzt.

Abschließend wird darauf hingewiesen, dass die obige Beschreibung einer bevorzugten Ausführungsform der vorliegenden Erfindung lediglich der Erläuterung der Erfindung dient und nicht als Beschränkung anzusehen ist.

## Patentansprüche

1. Motorunterstütztes Fahrrad, umfassend ein Rahmenelement (20), welches sich im Wesentlichen in Fahrtrichtung des motorunterstützten Fahrrads erstreckt und an seinem in Fahrtrichtung vorderen Ende (22) mit einem unteren Ende eines mit einem Kopfrohr (16) zum Abstützen eines Lenkers verbundenen Unterrohrs (18) und an seinem in Fahrtrichtung hinteren Ende (24) mit einem unteren Ende eines Sattelrohrs (26) zum Abstützen einer Sattelstütze oder/und eines Sattels verbunden ist, und eine motorangetriebene Unterstützungseinheit (12) zum Erzeugen einer auf eine Kurbelwelle (50) eines Pedalantriebs (52) des Fahrrads auszuübenden Unterstützungskraft,
**dadurch gekennzeichnet,**
**dass** das Rahmenelement (20) unterhalb der motorangetriebenen Unterstützungseinheit (12) angeordnet ist.

2. Motorunterstütztes Fahrrad nach Anspruch 1, **dadurch gekennzeichnet, dass** das Rahmenelement (20) ein Mittelteil (42) und zwei Anschlussteile (22, 24) aufweist, welche von den in Fahrtrichtung beabstandeten Enden des Mittelteils (42) nach oben hin vorstehen und mit dem Unterrohr (18) und dem Sattelrohr (26) verbunden sind.

3. Motorunterstütztes Fahrrad nach Anspruch 2, **dadurch gekennzeichnet, dass** bei zumindest einem der beiden Anschlussteile (22, 24) und dem diesen jeweils zugeordneten Rohr (18, 26) ebene Anschlussflächen vorgesehen sind, an denen das Anschlussteil (22, 24) und das diesem zugeordnete Rohr (18, 26) miteinander fest verbunden sind, und dass die ebenen Anschlussflächen zur Vergrö-βerung der Verbindungsfläche zwischen den Anschlussflächen gegenüber der Längsachse des Rohrs (18, 26) nicht rechtwinklig, sondern unter einem Winkel geneigt zur Längsachse des Rohrs (18, 26) verlaufen.

4. Motorunterstütztes Fahrrad nach Anspruch 2 oder 3, **dadurch gekennzeichnet, dass** jedes Anschlussteil (22, 24) mit einem Anschlussflansch zur Verbindung mit dem Unterrohr (18) oder/und dem Sattelrohr (26) versehen ist.

5. Motorunterstütztes Fahrrad nach einem der vorhergehenden Ansprüche, **dadurch gekennzeichnet, dass** das Rahmenelement (20) getrennt von dem Unterrohr (18) oder/und dem Sattelrohr (26) ausgebildet ist.

6. Motorunterstütztes Fahrrad nach einem der vorhergehenden Ansprüche, **dadurch gekennzeichnet, dass** das Rahmenelement (20) als Druckgussteil, vorzugsweise aus einer Aluminiumgusslegierung, als Schmiedeteil oder/und gefrästes Teil ausgebildet ist.

7. Motorunterstütztes Fahrrad nach einem der vorhergehenden Ansprüche, **dadurch gekennzeichnet, dass** das Rahmenelement (20) aus einer Aluminiumlegierung oder einem Faserverbundwerkstoff, insbesondere kohlefaserverstärktem Kunstharzmaterial, besteht.

8. Motorunterstütztes Fahrrad nach einem der vorhergehenden Ansprüche, **dadurch gekennzeichnet, dass** das Rahmenelement (20) eine Lagerstelle (34) zur Lagerung einer Hinterradgabel (30) des Fahrrads aufweist.

9. Motorunterstütztes Fahrrad nach Anspruch 8, **dadurch gekennzeichnet, dass** die Lagerstelle als Schwenklager (34) ausgebildet ist und dass die Hinterradgabel (30) schwenkbar an dem Rahmenelement (20) gelagert ist.

10. Motorunterstütztes Fahrrad nach einem der vorhergehenden Ansprüche, **dadurch gekennzeichnet, dass** das Rahmenelement (20) eine als Tretlager ausgebildete Lagerstelle zur Lagerung der Kurbelwelle (50) des Pedalantriebs (52) aufweist.

11. Motorunterstütztes Fahrrad nach einem der vorhergehenden Ansprüche, **dadurch gekennzeichnet, dass** das Rahmenelement (20) zwei in Querrichtung des Fahrrads voneinander beabstandete und in Längsrichtung des Fahrrads im Wesentlichen parallel zueinander verlaufende plattenförmige Elemente (44) aufweist.

12. Motorunterstütztes Fahrrad nach Anspruch 11, **dadurch gekennzeichnet, dass** die plattenförmigen Elemente (44) des Rahmenelements (20) über wenigstens ein in Querrichtung des Fahrrads verlaufendes Verbindungselement (46, 48) miteinander verbunden sind.

13. Motorunterstütztes Fahrrad nach Anspruch 12, **dadurch gekennzeichnet, dass** das wenigstens eine Verbindungselement wenigstens einen in einer Querrichtung des Fahrrads verlaufenden Verbindungssteg (46) umfasst.

14. Motorunterstütztes Fahrrad nach Anspruch 12 oder 13, **dadurch gekennzeichnet, dass** das wenigstens eine Verbindungselement ein unten geschlossenes, in einer Querrichtung verlaufendes schalenförmiges Aufnahmeelement (48) zur Abdeckung der Unterseite der motorangetriebenen Unterstützungseinheit (12) oder/und Lagerung der motorangetriebenen Unterstützungseinheit (12) oder/und Aufnahme eines Getriebes umfasst.

15. Motorunterstütztes Fahrrad nach Anspruch 14, **dadurch gekennzeichnet, dass** wenigstens ein in einer Querrichtung des Fahrrads weisendes Ende des schalenförmigen Aufnahmeelements (48), vorzugsweise unter Bildung einer Stufe, in Querrichtung über wenigstens ein plattenförmiges Element (44) hinaus verlängert ist und an seinem äußeren Ende mit einer im Wesentlichen halbkreisförmigen Abdeckung (54) verbunden ist.

16. Motorunterstütztes Fahrrad nach Anspruch 14 oder 15, **dadurch gekennzeichnet, dass** das schalenförmige Aufnahmeelement (48) oder/und die Abdeckung (54) das Tretlager konzentrisch umgeben.

17. Motorunterstütztes Fahrrad nach einem der vorhergehenden Ansprüche, **dadurch gekennzeichnet, dass** das Sattelrohr (26) gekröpft ausgebildet ist und dass das mit dem Rahmenelement (20) verbundene untere Ende des Sattelrohrs (26) zur Rückseite des Fahrrads hin versetzt ist.

18. Motorunterstütztes Fahrrad nach einem der vorhergehenden Ansprüche, **dadurch gekennzeichnet, dass** die motorangetriebene Unterstützungseinheit (12) einen Elektromotor aufweist.
